# EUROPEAN PATENT SPECIFICATION

(11) **EP 0 932 787 B1**
(45) Date of publication and mention of the grant of the patent: **26.09.2001**
(21) Application number: 97944653.1
(22) Date of filing: 14.10.1997
(51) Int. Cl.: F16L 33/00, F16L 11/127, F16L 11/12

(54) **PROCESS FOR APPLYING A PULL RELIEF IN A HOSE**
VERFAHREN ZUM ANBRINGEN EINER ZUGENTLASTUNG IN EINEM SCHLAUCH
PROCEDE POUR MONTER UN DISPOSITIF PERMETTANT DE DIMINUER LA FORCE DE TRACTION D'UN TUYAU

(30) Priority: 15.10.1996 BE 9600867
(43) Date of publication of application: 04.08.1999
(73) Proprietor: PLASTIFLEX EUROPE N.V., 3583 Paal-Beringen (BE)
(72) Inventor: DIELS, Domin, B-2275 Gierle (BE)
(74) Representative: Luys, Marie-José A.H.
(86) International application number: BE9700118
(87) International publication number: WO9817936

(56) References cited:
- DE-U- 29 507 806
- FR-A- 2 147 483
- FR-A- 2 721 682

## Description

This invention relates to a process for applying a pull relief, in longitudinal direction in a first hose.

Such hoses provided with a pull relief are frequently applied in vacuum cleaners and other industrial appliances. Inside the first hose, often a second tube is applied in longitudinal direction. The presence of the second tube allows for instance a simultaneous transport of two liquids, or a liquid and a gas through the hose. It is also possible to provide the second tube with electrical conductors. The second tube then serves as a protective sleeve for the electrical conductors. In that case, it is for instance possible to simultaneously transport a liquid or gas through the first hose, and to ensure an electrical contact.

With hoses containing electrical conductors, it is important to prevent the electrical conductors from being subjected to an undesirable tensile force. The copper core present in the electrical conductors namely has a low extensibility, and is quite easily broken, upon exertion of an excessive tensile force. Such a broken electrical conductor is no longer capable of ensuring electrical contact, so that the hose is no longer usable. The undesirable stretching of such hoses in longitudinal direction may be limited by providing the hose with a pull relief.

A hose provided with a pull relief is known from DE-U1-295.07.806. The hose described in DE-U1-295.07.806 is in longitudinal direction provided with an inner tube, which contains the electrical conductors. The electrical conductors have about the same electrical conductors. The electrical conductors have about the same length as the hose and/or inner tube. In longitudinal direction of the hose, a pull relief in the shape of a rope is provided. The rope is about the same length as the hose and is made of a material with a low extensibility. The rope is adhered over its entire length to the hose or inner tube, through an adhesive layer, or incorporated into the inner tube.

In the hoses described in DE-U1-295.07.806, the adhesion of the pull relief to the adhesive, and consequently to the hose, is however weak. If such a hose is subjected to a sudden tensile force, the pull relief rope will quite rapidly release from the adhesive layer. The pull relief is then no longer attached to the hose, and is thus no longer capable of serving its function.

The materials that are applied for the pull relief according to DE-U1-295.07.B06, show a low extensibility, and are moreover quite rapidly ruptured when subjected to a sudden tensile force. Following such a rupture, the tensile force is still transferred to the hose and/or inner tube, and consequently to the electrical conductors.

DE-U1-295.07.806 does describe that no adequate limitation of the elongation of the hose is obtained, if the pull relief is loose in the hose, and the pull relief is attached through its extremities to the extremities of the hose. According to DE-U1-295.07.806, such an attachment would require the use of a voluminous rupture proof attachment. In the coupling pieces, insufficient space would be available for that. Moreover, the attachment of the pull relief in the coupling piece would involve damage of the pull relief, and a diminished, weakened pull relief.

It is the aim of this invention to provide a process for producing a hose according to the preamble, whereby the extensibility of the hose is adapted to the extensibility of the electrical conductors present in the hose.

This is achieved according to the invention with the measures described in the characterising part of the first claim.

Thereby, the adhesive is selected such, that its temperature in the hot liquid state is equal or superior to the melting temperature of the materials the coupling piece and the hose are made of. According to the invention, melting is understood to mean the softening or transformation of a material to a sufficiently liquid state to allow a flowing out with the adhesive.

The hot adhesive injected in the intermediate cavity has a temperature which is sufficiently high for heating and melting a surface layer of the inner part and outer part of the coupling piece, and a surface layer of the hose. Also as a consequence of the exerted pressure, the hot liquid adhesive and the molten surface layers flow into each other, thus forming as a matter of fact one continuous liquid phase. Thus, a continuous transition is formed between the inner part of the coupling piece, the hose and the adhesive on the one hand, and between the welding agent and the outer part of the coupling piece on the other hand. Thereby, the pull relief that is located in the intermediate cavity, is embedded in the hot adhesive. After cooling down, the inner part of the coupling piece, the cooled solidified adhesive layer, the outer part of the coupling piece and the hose form as a matter of fact one entity in which the pull relief is embedded.

Because it is embedded, the pull relief forms as a matter of fact one entity with the coupling piece and hose, so that a tensile force exerted on the hose is transferred immediately to the pull relief, and an improved transfer of a tensile force exerted on the hose or coupling piece to the pull relief can be obtained. By embedding the pull relief in the coupling piece, also the contact surface between the pull relief and coupling piece is increased, allowing an improved transfer of the tensile force.

Such a liquid adhesive can be easily injected in the intermediate cavity, for example through an injection opening in the outer part of the coupling piece, and flows out well in the whole intermediate cavity. Since the extremity of the hose is also embedded in the intermediate cavity, an almost continuous transition from the hose to the coupling piece can be obtained.

Because the whole intermediate cavity is filled with adhesive, the intermediate cavity is well sealed. In that way, it is possible to avoid that materials that are transported through the hose, end up between the inner and outer parts of the coupling piece, or leak through the coupling piece.

The adhesive is preferably selected such that it shows a good affinity for the material of which the hose and the inner and outer parts of the coupling piece are made, in order to obtain a good mixing with the molten surface layers and achieve a good adhesion.

The pull relief is preferably applied in a second tube, which is preferably adhered in longitudinal direction in the first hose, by means of a hot liquid adhesive.

By applying the pull relief in the second tube, it is possible to avoid a contact of the pull relief with corrosive substances that are for instance transported through the first hose.

A pull relief which is loose in the first hose moreover constitutes a resistance, for example for dust particles, which may be present in the substances that are transported through the first hose, for example air. Due to the presence of such a resistance, the dust particles may show an undesirable accumulation in the hose.

According to an emboidiment of the invention, preferably at least one electrical conductor is previously applied in the second tube, whereby the at least one electrical conductor is adhered in the intermediate cavity in such a way that its extremity protrudes from the coupling piece.

By previously applying the at least one electrical conductor in the second tube, the electrical conductor can be embedded in the coupling piece, simultaneously with the pull relief. This provides a faster and economically more advantageous process. In this way, moreover, a hose may be obtained in which the electrical conductors are easily accessible for realising an electrical contact.

The presence of a sealing of a flexible material moreover prevents the electrical conductors from touching the hard edges of the extremities of the second tube. This decreased friction favourably influences the lifetime of the electrical conductors.

This may be achieved by sealing the extremity of the second tube with a sealing ring of a flexible plastic material. The plastic material is for example a flexible rubber, a thermoplastic elastomer, for example EPDM rubber. Such a flexible rubber may adapt itself somewhat to the shape of the second tube.

This may also be achieved by injecting an adhesive or a flexible sealing agent in the extremity of the second tube. The adhesive may be the same as the above described adhesive for attaching the pull relief.

It is also possible to extend the extremity of the second tube with a lip, whereby the lip is adhered with hot liquid adhesive to the inner wall of the first hose or coupling piece, in such a way that the second tube is completely seated at its extremity.

According to an embodiment of the invention, the extremity of the pull relief is preferably tied around the inner part of the coupling piece.

Because the knot is completely embedded in the adhesive layer in the coupling piece, the pull relief can as a matter of fact be mechanically anchored in the adhesive, and a better adhesion of the pull relief in the coupling piece can be realised.

In another embodiment of the invention, the pull relief is twisted around the inner part of the coupling piece.

Because the pull relief is twisted, the contact surface with the adhesive is enlarged, and also an improved adhesion in the coupling piece and an improved transfer of forces exerted on the hose, can be obtained.

According to an embodiment of the invention, the at least one electrical conductor is preferably spirally wound over at least part of its length.

Because of the presence of the spiral winding, the electrical conductor is capable of extending somewhat in case a tensile force is exerted on the electrical conductor, without thereby involving a plastic distortion of the copper core. Such a hose can be somewhat extended lengthwise, without involving adverse effects on the electrical connection. As a result of the tensile force, the length of the electrical conductor will initially increase, because the distance between the windings of the spiral is increased. The length of the conductor may further increase, by a further pulling apart of the windings and finally a straightening of the windings.

According to an embodiment of the invention, the at least one electrical conductor is twisted over at least part of its length.

In such twisted conductors, two or more conductors are almost interlaced with each other. They comprise a plurality of twisting points, i.e points where the direction of the conductors changes. Between these twisting points, the conductors are somewhat bent When on such electrical conductors a tensile force is exerted, initially the bent parts are somewhat straightened, and the conductors are pulled closer to each other, so that their length increases, without involving an undesirable tensile force being exerted on the copper core, or the copper core being plastically distorted.

Moreover, by using twisted conductors, it is possible to overcome a length surplus, resulting for example from a temporary stretching of the spirally wound conductors. When the first hose returns to its original dimensions, after having been stretched, it also forces the electrical conductors to return to their original dimensions. Because of the pushing force that is thereby exerted on the extremities of the electrical conductors, the twisted conductors are forced apart between their twisting points. Consequently, the bending of the conductors between two twisting points increases, and a length surplus may be overcome.

The first and second hoses are preferably made of the same material. When the hoses and the coupling piece are made of the same material, they are preferably welded together by means of a hot liquid welding agent, which is injected in the intermediate cavity under pressure.

The welding agent is preferably made of the same material as the hoses and the coupling piece. In that case, the welding agent, the molten surface layers of the outer and inner parts of the coupling piece, and the hose may optimally flow into each other and mix together, so that as a matter of fact one entity is obtained, wherein the pull relief is embedded, and an optimal adhesion may be obtained.

In case the first and second hoses and the coupling piece are made of polyethylene, preferably hot liquid, preferably molten polyethylene is injected as an adhesive in the intermediate cavity.

Thereby, a surface layer of the hose and the inner and outer parts of the coupling piece will melt upon contact with the hot liquid polyethylene. This surface layer subsequently mixes with the injected molten polyethylene, so that the adhesive and the pull relief embedded in the adhesive will form one entity with the coupling piece.

If the first and second hoses are made of different materials, they are preferably glued together with a hot-melt glue.

According to an embodiment of the invention, the pull relief may be made of various materials. The pull relief of the invention is preferably made of a material with a limited extensibility in longitudinal direction and a high tensile strength. The extensibility of the pull relief is in any case substantially lower than that of the hose. The pull relief may be made of various materials, for example a polyester, a polyamide, polyethylene, glass fiber.

The length of the pull relief is preferably selected such that its length in maximum stretched condition is inferior or equal to the length of the electrical conductors. The electrical conductors mostly extend over the entire length of the hose, but can, if so desired, also have a smaller length. If a tensile force is exerted on such a hose, this will initially result in a stretching of the hose till the length of the hose and the pull relief are the same, followed by a stretching of the pull relief. Because the pull relief has a much smaller extensibility than the hose, the extensibility of the hose is determined by the extensibility of the pull relief. The presence of the pull relief thus prevents the hose from stretching too much and/or breaking if a tensile force is exerted on it. Because moreover the length of the pull relief in maximum stretched condition is inferior or equal to the length of the electrical conductors, it is possible to prevent the electrical conductors from being undesirably stretched and/or plastically distorted.

Because the materials mentioned above have a limited, but some extensibility, they also stretch upon the bending and folding of the flexible hose, so that the original flexibility of the hose combination is not adversely affected. Moreover, these materials return to their original dimensions, after the tensile force is withdrawn.

Because the materials mentioned above also have a large breaking strength, according to the invention it is also possible to substantially prevent the possibility of breaking, even if a relatively high tensile force is exerted on the pull relief.

According to an embodiment of the invention, the pull relief may have various shapes, for example a rope, a ribbon, a wire. The rope may be either round or flattened. The rope may be composed of one or more wires, of one or more wire bundles attached to each other. The rope preferably comprises two series of six wire bundles.

The outside of the pull relief rope is preferably provided with a thin layer of a substance which shows a good affinity for the adhesive, so as to obtain a good adhesion of the pull relief to the adhesive.

The common, commercially available hoses may be used according to the invention, for example hoses made completely of plastic material, or corrugated hoses reinforced with a spiral steel spring.

The invention is further elucidated by means of the appended figures and description of the figures.
Figure 1 shows the outside of the hose;
Figure 2 shows a longitudinal section of the hose;
Figure 3 shows a cross section of the second tube;
Figure 4 shows the coupling piece from which the electrical conductors protrude.
Figure 5 shows the extremity of the hose with the inner and outer parts of the coupling piece in perspective;
Figure 6 shows a longitudinal section of another embodiment of Figure 2.
The first hose 1 shown in figure 1 is in longitudinal direction provided over at least part of its length, preferably over its entire length, with a second tube 2. If so desired, the first hose 1 may be provided with a plurality of second tubes 2.

The second tube 2 is preferably attached inside the first hose 1, but may also be attached to the outside of the first hose 1.

The first hose 1 and second tube 2 may have various shapes. They may for instance be cylindrical or conical. The second tube 2 may for instance have a round, oval or square section The second tube 2 may be hollow, or be a cable.

The first hose 1 is preferably a so-called flexible vacuum hose, the wall of which comprises, in cross direction of the hose, parallel extending grooves and protrusions. These successive grooves and protrusions are responsible for the flexibility of the hose, through which the hose is extremely bendable and pliable in all directions. The first hose 1 is preferably made of a plastic material with a so-called memory. Such a hose returns to its original shape after having been distorted. Examples of suitable plastic materials are polyethylene, polypropylene, or copolymers thereof.

The second tube 2 may be attached by means of an adhesive to the first hose 1, over only part of its length, or over its entire length. The composition of the adhesive is preferably selected such, that it shows a high affinity for and a good adhesion to the materials of which the second tube 2 and first hose 1 are made. The adhesive may be a welding agent or a hot-melt glue. The adhesive may be made of the same material as the hoses, or another material. If the first hose 1 and second tube 2 are made of polyethylene, the adhesive is preferably polyethylene.

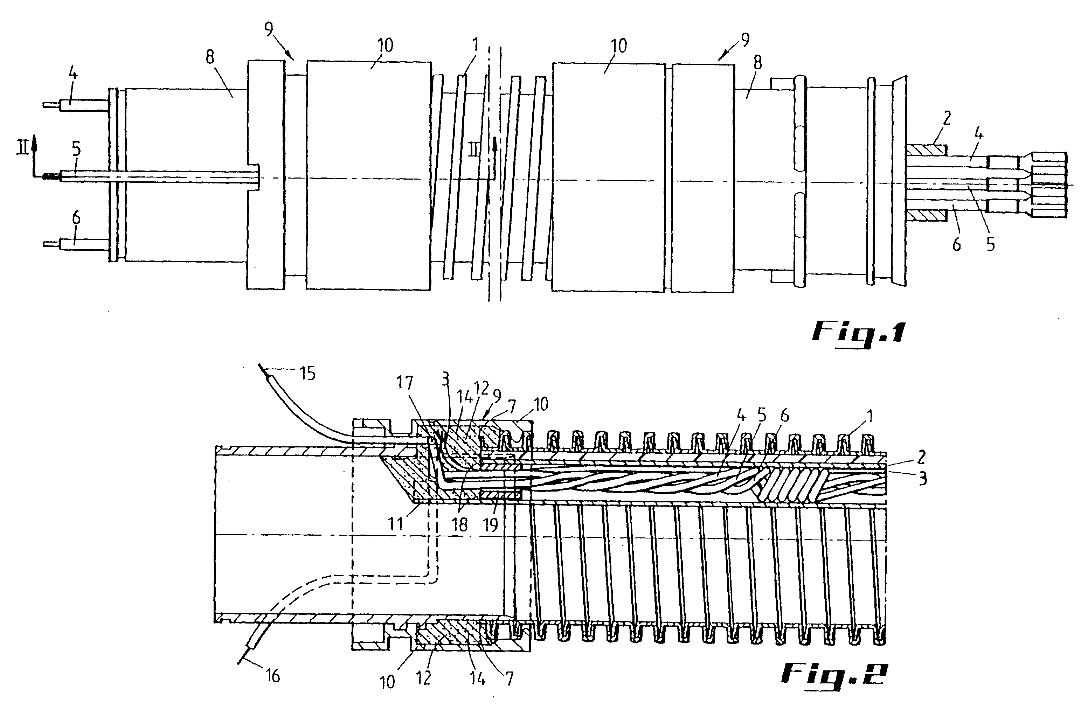

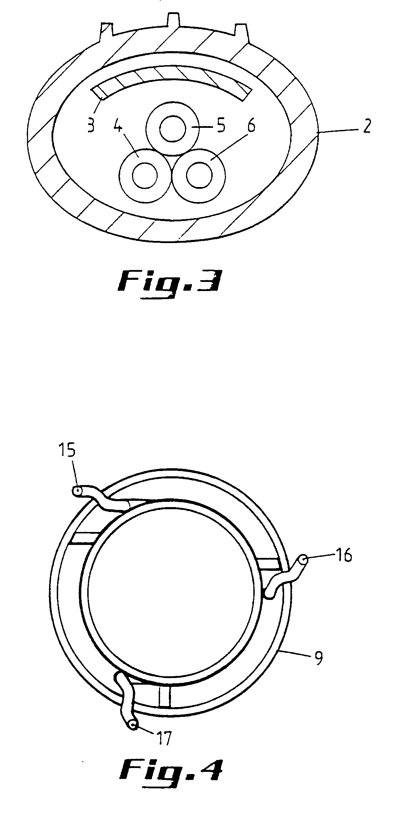

The hose 1 is also provided with a pull relief 3. The pull relief 3 may be introduced in the first hose 1 or second tube 2 (see figures 2 and 3), but is preferably introduced in the second tube 2. The pull relief 3 is preferably loose in the first hose 1 or second tube 2.

In the second tube 2, preferably at least one electrical conductor 4, 5, 6 is located. The electrical conductors 4, 5, 6 are preferably enveloped in an insulating sleeve.

The adhesive is preferably selected such that it shows a good affinity for said plastic sleeve. The electrical conductors 4, 5, 6 are preferably twisted and spirally wound over at least part of their length. This spiral winding may be applied on the electrical conductors 4, 5, 6 at any position, for example at the extremity, or in the middle.

The second tube 2 is preferably sealed at its extremity with a flexible sealing agent 22, to prevent the electrical conductors 4-6 from being contacted by substances that are transported through the first hose 1.This sealing agent 22 may be the same as the adhesive 14 with which the pull relief 3 is attached in the intermediate cavity In the coupling piece, or a different one. The second tube 2 may also be sealed with a flexible sealing ring 19, which is preferably made of a flexible rubber, for instance a thermoplastic elastomer, for instance EPDM rubber.

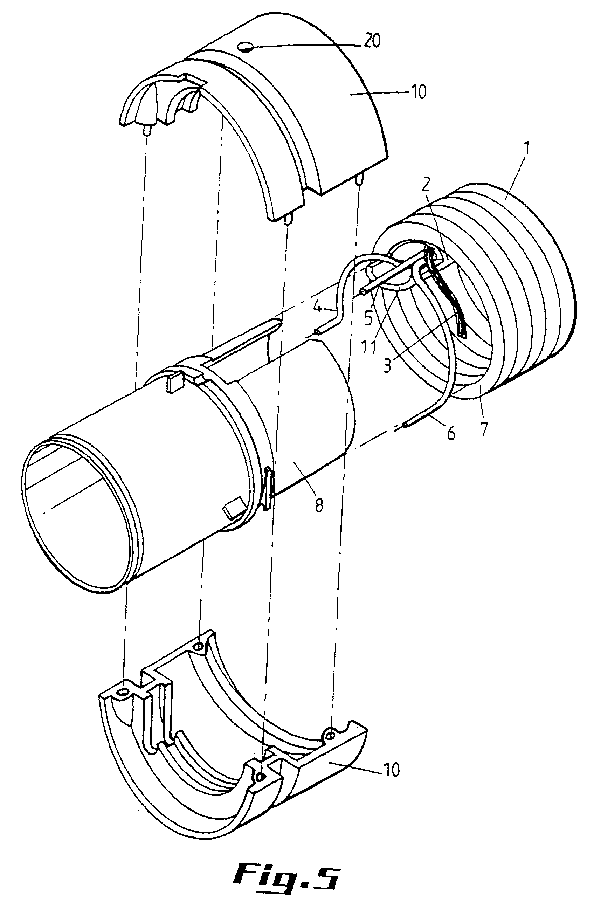

As appears from figures 2 and 5, at least one of the extremities of the second tube 2 may be provided with a lip-shaped extension 11. The lip 11 is preferably attached to the inner part 8 of the coupling piece 9, or to the inner wall of hose 1, by means of glueing or welding. Because of the presence of the lip 11, it is possible to shield the electrical conductors from the inner space of the hose 1, in order to allow transport for instance of a corrosive substance through the hose 1, and simultaneously realise an electrical connection through the electrical conductors 4, 5, 6.

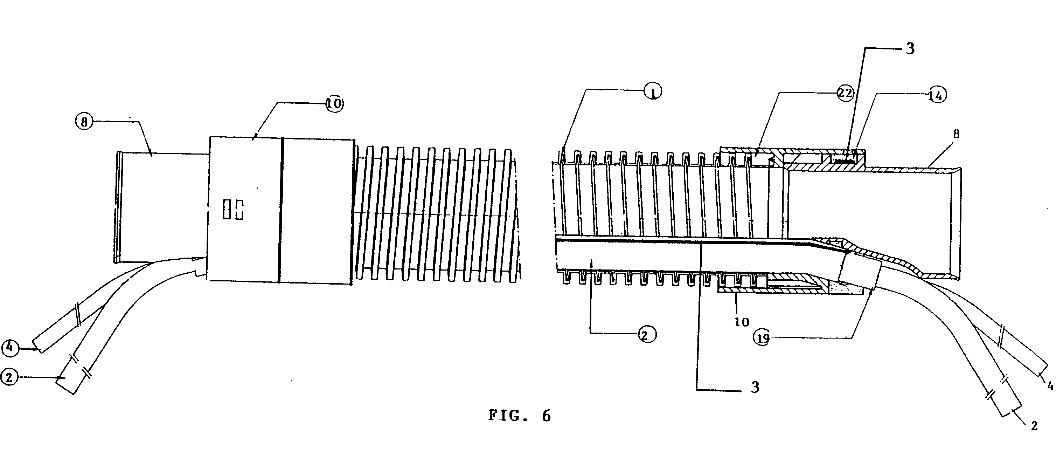

It is also possible, as shown in figure 6, to attach the second tube 2 in an intermediate space 21 between the inner 8 and outer part 10 of the coupling piece, by injecting adhesive 14 in this intermediate space. In that case, often a mandrel is introduced in the inner part 8 of the coupling piece 9, so as to control the shape of the adhesive 14 after curing or solidifying. Such an arrangement offers the advantage that electrical conductors 4, 5, 6 present in the second tube 2 can move freely in the second tube .

The glue and/or welding layer is preferably applied such that a rounded attachment of the lip 11 is obtained. In that way, it is possible to prevent this glue and/or welding layer from forming a resistance, behind which dust particles may accumulate.

At least one extremity 7 of the first hose 1 is provided with a coupling piece 9. By means of this coupling piece 9 the hose may be coupled to machines, for example a vacuum cleaner. It is also possible to provide both extremities of the first hose 1 with such a coupling piece 9.

As shown in figures 2 and 5, the coupling piece 9 comprises an inner part 8 and an outer part 10. Both parts 8, 10 are preferably provided with the required edges and notches so as to allow an improved adhesion of the adhesive, through a mechanical anchoring. These edges mostly have a small thickness, so that they can more easily be molten upon contact with a hot liquid adhesive, than a part with a bigger thickness. This way, an accelerated melting of the contact surface of the coupling piece and the adhesive may be obtained, and thus a faster mixing of the adhesive with the molten part of the coupling piece, and an improved adhesion. These edges and notches may also form a guide for the pull relief 3 and the electrical conductors 4, 5, 6.

Upon applying the outer part 10 to the inner part 8 of the coupling piece, an intermediate cavity 12 (figure 2) is formed between both parts, in which the adhesive 14 is applied so as to attach the inner part 8 and outer part 10 of the coupling piece 9 to each other. This intermediate cavity 12 is also destinated for receiving the electrical conductors 4, 5, 6 and receiving and attaching the extremity of the pull relief 3.

The pull relief 3 may have all sorts of shapes, but has preferably the shape of a rope. The rope 3 may be attached in the coupling piece in various ways. The rope 3 may be embedded in the intermediate cavity 12 as such. The rope 3 may also be tied in a knot around the inner part 8 of the coupling piece 9, and be embedded in the intermediate cavity 12 afterwards. The rope 3 may also be twisted in the intermediate cavity.

The rope 3 may be glued between the inner part 8 and outer part 10 of the coupling piece 9, for example by means of a hot-melt glue which adheres well to both parts. The rope 3 is preferably welded between the inner part 8 and the outer part 10 by means of a welding agent that shows a good affinity for the rope. To that end, the surface of the rope 3 may be provided with a coating of a material showing a good affinity for the adhesive. In that case, upon injection of the adhesive 14, a mixing of the adhesive 14 with the coating may be obtained, so that a continuous transition is formed between the adhesive 14 and the pull relief 3. In that case, the pull relief 3 as a matter of fact forms one entity with the adhesive 14, the coupling piece 9 and the hose 1.

The inner part 8 and outer part 10 of the coupling piece 9 may also comprise a recess for receiving a metal ring. In that case, the rope 3 may for instance be tied in a knot around the metal ring, the whole being subsequently embedded in the coupling piece 9.

If the rope 3 is present in the second tube 2, the diameter of the rope 3 is preferably adapted to the diameter of the second tube 2 and the intermediate cavity taken by the electrical conductors 4, 5, 6. The diameter of the rope 3 is preferably such, that the movements of the electrical conductors 4, 5, 6 are affected to the smallest extent possible.

For the production of the hose, the second tube 2 is preferably previously attached into the first hose 1. Both the first and second hoses are preferably made of polyethylene. Then the extremity 13 of the pull relief 3 is applied around the inner part 8 of the coupling piece 9 and possibly twisted or tied in a knot. The inner part 8 and outer part 10 of the coupling piece 9 are introduced into a mold. The extremity of the second tube 2 is introduced into the inner part 8 of the coupling piece 9, or into the intermediate cavity between the inner 8 and outer part 10 of the coupling piece 9. The outer part 10 is attached to the inner part 8, by means of the ribs and edges present in these parts 8, 10. The outer part 10 preferably comprises two half shells (see figure 4) fitting around the inner part and to each other. Preferably, the parts 8, 10 of the coupling piece are also made of polyethylene.

The extremity of the second tube is introduced into the inner part 8 of the coupling piece 9, or into the intermediate space 21.

Then the hot molten adhesive is injected under pressure in the intermediate cavity 12, preferably through the injection opening 20, and possibly In the intermediate space 21. between the inner part 8 and outer part 10 of the coupling piece 9. Thereby, the temperature of the adhesive is adjusted such that it is sufficiently high to melt a surface layer of the first 8 and second part 10 of the coupling piece 9 and the hose 1.

Melting, according to the invention, is understood to mean a transforming to the liquid state, or softening.

The adhesive 14 is selected such, that its melting point is equal or superior to the melting point or softening point of the material of which the coupling piece 9 and hose 1 are made.

By injection of the hot molten adhesive 14, a surface layer of the inner 8 and outer part 10, the hose 1, the coating of the pull relief 3, and possibly the second tube 2 are melted. The molten layers flow into each other and form one continuous phase with the injected polyethylene adhesive 14. In the second tube 2. a sealing ring is applied.

Thereafter, molten adhesive is applied on the lip 11, so that the lip forms one entity with the hose 1, or the inner part 8 of the coupling piece 9. Instead thereof, it is also possible to inject sealing agent 22 in the extremity of the second tube 2. Then the whole is cooled. The polyethylene adhesive 14 and the sealing agent 22 solidify, whereby a continuous transition between the adhesive 14 and the inner part 8 and outer part 10 of the coupling piece 9, the hose 1, and the coating of the pull relief is formed, whereby the extremity of the pull relief 3 is embedded in the polyethylene adhesive layer.

If a tensile force is exerted on such a hose, first the first hose 1, second tube 2 and pull relief 3 are stretched, whereby the total elongation is determined by the length and extensibility of the pull relief 3. Because the pull relief 3 and coupling piece 9 as a matter of fact form one entity, a tensile force exerted on the hose 1 is almost completely transferred through the coupling piece 9 to the pull relief 3. Initially, the electrical conductors 4, 5, 6 will be somewhat stretched, due to the stretching of the hose 1 and pull relief 3, in that initially the distance between the windings of the spiral increases, and the conductors 4-6 in the twisted part are drawn to each other, after which the electrical conductors 4-6 are further straightened. A further stretching of the hose 1 is prevented, because the pull relief 3 has reached its maximum elongation.

If the tensile force is withdrawn, the pull relief 3 returns to its original dimensions, as well as the first hose 1, and possibly the second tube 2. Also the electrical conductors 4-6 are forced back to their original dimensions, by a pushing apart of the electrical conductors in the twisted part. Thereby, restoration of the spiral winding is possible to a limited extent.

### Reference list

- 1: first hose
- 2: second tube
- 3: pull relief
- 4,5,6: electrical conductors
- 7: extremity of first hose
- 8: inner part of coupling piece
- 9: coupling piece
- 10: outer part of coupling piece
- 11: lip
- 12: intermediate cavity
- 13: extremity of pull relief
- 14: adhesive
- 15, 16, 17: extremities of electrical conductors
- 18: extremity of second tube
- 19: sealing ring
- 20: injection opening
- 21: intermediate space
- 22: sealing agent

## Claims

1. Process of securing a first hose comprising a pull relief (3) to a coupling piece, **characterised in that** an extremity (7) of the first hose (1) is attached to an inner part (8) of the coupling piece (9), and an outer part (10) of the coupling piece (9) is attached to the inner part (8) and said first hose (1) in such a way as to create an intermediate cavity (12), and an extremity (13) of the pull relief (3) is introduced into said intermediate cavity (12) and a hot adhesive (14) in the liquid state is injected under pressure said intermediate cavity (12), after which the adhesive is cooled.

2. Process according to claim 1, **characterised in that** that the pull relief (3) is previously introduced into a second tube (2), which second tube (2) is attached in longitudinal direction in the first hose (1), by means of a hot adhesive in the liquid state.

3. Process according to claim 2, **characterised in that** also at least one electrical conductor (4, 5, 6) is previously introduced into the second tube (2), and the at least one electrical conductor (4, 5, 6) is adhered in such a way in the intermediate cavity (12), that its extremity (15, 16, 17) protrudes from the coupling piece (9).

4. Process according to any one of claims 2 or 3, **characterised in that** the second tube (2) is sealed at its extremity with a flexible sealing (19).

5. Process according to any one of claims 1 to 4, **characterised in that** the second tube is introduced into an intermediate space (21) between the inner (8) and outer part (10) of the coupling piece (9), and hot adhesive (14) in the liquid state is injected in said intermediate space (21).

6. Process according to any one of claims 1 to 5, **characterised in that** the extremity (13) of the pull relief (3) is tied around the inner part (8) of the coupling piece (9).

7. Process according to any one of claims 1 to 6, **characterised in that** the pull relief (3) is twisted around the inner part (8) of the coupling piece (9).

8. Process according to any one of claims 3 to 6, **characterised in that** the at least one electrical conductor (4, 5, 6) is spirally wound over at least part of its length.

9. Process according to any one of claims 3 to 8, **characterised in that** the at least one electrical conductor (4, 5, 6) is twisted over at least part of its length.

10. Process according to any one of claims 1 to 9, **characterised in that** the adhesive is a welding agent.

11. Process according to any one of claims 2 to 10, **characterised in that** the first hose (1), second tube (2) and coupling piece (9) are made of polyethylene, and hot molten polyethylene is injected in the intermediate cavity (12).

## Patentansprüche

1. Verfahren zur Befestigung eines ersten Schlauches, der eine Zugentlastung (3) umfasst, an einem Kupplungsstück,
**dadurch gekennzeichnet, dass**
ein Ende (7) des ersten Schlauches (1) an einem inneren Teil (8) des Kupplungsstücks (9) angebracht wird,
ein äußeres Teil (10) des Kupplungsstückes (9) an den inneren Teil (8) und dem besagten ersten Schlauch (1) in einer solchen Weise angebracht wird, dass ein Zwischenraum (12) gebildet wird, und
ein Ende (13) der Zugentlastung (3) in den besagten Zwischenraum (12) eingeführt und ein heißer Klebstoff (14) im flüssigen Zustand unter Druck in den besagten Zwischenraum (12) injiziert wird, wonach der Klebstoff abgekühlt wird.

2. Verfahren nach Anspruch 1,
**dadurch gekennzeichnet, dass** die Zugentlastung (3) zuvor in einen zweiten Rohrschlauch (2) eingeführt wird, wobei der zweite Rohrschlauch (2) in Längsrichtung im ersten Schlauch (1) angebracht wird, mittels eines heißen Klebstoffs in seinem flüssigen Zustand.

3. Verfahren nach Anspruch 2,
**dadurch gekennzeichnet, dass** auch zumindest ein elektrischer Leiter (4, 5, 6) zuvor in den zweiten Rohrschlauch (2) eingeführt wird, und der zumindest eine elektrische Leiter (4, 5, 6) auf eine solche Weise im Zwischenraum (12) angeklebt wird, dass seine Enden (15, 16, 17) auf dem Kupplungsstück (9) hervorstehen.

4. Verfahren nach einem der Ansprüche 2 oder 3,
**dadurch gekennzeichnet, dass** der zweite Rohrschlauch (2) an seinem Ende mit einer flexiblen Dichtung (19) abgedichtet wird.

5. Verfahren nach einem der Ansprüche 1 bis 4,
**dadurch gekennzeichnet, dass** der zweite Rohrschlauch in einen Zwischenraum (21) zwischen dem inneren (8) und äußeren Teil (10) des Kupplungsstückes (9) eingeführt wird, und heißer Klebstoff (14) im flüssigen Zustand in den besagten Zwischenraum (21) injiziert wird.

6. Verfahren nach einem der Ansprüche 1 bis 5,
**dadurch gekennzeichnet, dass** das Ende (13) der Zugentlastung (3) um den inneren Teil (8) des Kupplungsstückes (9) herumgebunden ist.

7. Verfahren nach einem der Ansprüche 1 bis 6,
**dadurch gekennzeichnet, dass** die Zugentlastung (3) um den inneren Teil (8) des Kupplungsstückes (9) herumgewunden ist.

8. Verfahren nach einem der Ansprüche 3 bis 6,
**dadurch gekennzeichnet, dass** der zumindest eine elektrische Leiter (4, 5, 6) über zumindest einen Teil seiner Länge spiralförmig gewunden ist.

9. Verfahren nach einem der Ansprüche 3 bis 8,
**dadurch gekennzeichnet, dass** der zumindest eine elektrische Leiter (4, 5, 6) zumindest über einen Teil seiner Länge verdreht ist.

10. Verfahren nach einem der Ansprüche 1 bis 9,
**dadurch gekennzeichnet, dass** der Klebstoff ein Schweißmittel ist.

11. Verfahren nach einem der Ansprüche 2 bis 10,
**dadurch gekennzeichnet, dass** der erste Schlauch (1), der zweite Rohrschlauch (2) und das Kupplungsstück (9) aus Polyethylen hergestellt sind, und heißes geschmolzenes Polyethylen in den Zwischenraum (12) injiziert wird.

## Revendications

1. Procédé pour fixer un premier tuyau comprenant un dispositif (3) permettant de diminuer la force de traction du tuyau à un élément d'accouplement, **caractérisé en ce qu'**une extrémité (7) du premier tuyau (1) est attachée à une partie intérieure (8) de l'élément d'accouplement (9) et une partie extérieure (10) de l'élément d'accouplement (9) est attachée à la partie intérieure (8) et au dit premier tuyau (1) de manière à créer une cavité intermédiaire (12), et une extrémité (13) du dispositif (3) permettant de diminuer la force de traction du tuyau est introduite dans ladite cavité intermédiaire (12) et un adhésif chaud (14) à l'état liquide est injecté sous pression dans ladite cavité intermédiaire (12), après quoi l'adhésif est refroidi.

2. Procédé selon la revendication 1, **caractérisé en ce que** le dispositif (3) permettant de diminuer la force de traction du tuyau est préalablement introduit dans un deuxième tube (2), lequel deuxième tube (2) est attaché dans le sens longitudinal au premier tuyau (1) au moyen d'un adhésif chaud à l'état liquide.

3. Procédé selon la revendication 2, **caractérisé en ce qu'**au moins un conducteur électrique (4, 5, 6) est aussi préalablement introduit dans le deuxième tube (2) et ledit au moins un conducteur électrique (4, 5, 6) est collé de telle manière dans la cavité intermédiaire (12) que son extrémité (15, 16, 17) fait saillie de l'élément d'accouplement (9).

4. Procédé selon une quelconque des revendications 2 ou 3, **caractérisé en ce que** le deuxième tube (2) est scellé à son extrémité avec un scellement flexible (19).

5. Procédé selon une quelconque des revendications 1 à 4, **caractérisé en ce que** le deuxième tube est introduit dans un espace intermédiaire (21) entre la partie intérieure (8) et la partie extérieure (10) de l'élément d'accouplement (9) et de l'adhésif chaud (14) à l'état liquide est injecté dans ledit espace intermédiaire (21).

6. Procédé selon une quelconque des revendications 1 à 5, **caractérisé en ce que** l'extrémité (13) du dispositif (3) permettant de diminuer la force de traction du tuyau est liée autour de la partie intérieure (8) de l'élément d'accouplement (9).

7. Procédé selon une quelconque des revendications 1 à 6, **caractérisé en ce que** le dispositif (3) permettant de diminuer la force de traction du tuyau est entortillé autour de la partie intérieure (8) de l'élément d'accouplement (9).

8. Procédé selon une quelconque des revendications 3 à 6, **caractérisé en ce que** ledit au moins un conducteur électrique (4, 5, 6) est enroulé en spirale sur au moins une partie de sa longueur.

9. Procédé selon une quelconque des revendications 3 à 8, **caractérisé en ce que** ledit au moins un conducteur électrique (4, 5, 6) est torsadé au moins sur une partie de sa longueur.

10. Procédé selon une quelconque des revendications 1 à 9, **caractérisé en ce que** l'adhésif est un agent de soudage.

11. Procédé selon une quelconque des revendications 2 à 10, **caractérisé en ce que** le premier tuyau (1), le deuxième tube (2) et l'élément d'accouplement (9) sont en polyéthylène, et du polyéthylène en fusion est injecté dans la cavité intermédiaire (12).
